# EUROPEAN PATENT APPLICATION

(11) **EP 3 943 774 A1**
(43) Date of publication of application: **26.01.2022**
(21) Application number: 20774362.6
(22) Date of filing: 09.03.2020
(51) Int. Cl.: F16D 65/02, F16D 55/226, B22C 9/08, B22C 9/28

(54) **CALIPER BODY FOR VEHICLE DISC BRAKE**

(30) Priority: 19.03.2019 JP 2019050820
(71) Applicant: Hitachi Astemo, Ltd., Hitachinaka-shi, Ibaraki 312-8503 (JP)
(72) Inventor: UEHARA, Kazumasa, Tomi-city, Nagano 3890514 (JP)
(74) Representative: Hoefer & Partner Patentanwälte mbB
(86) International application number: PCT/JP2020/009902
(87) International publication number: WO 2020/189356

(57) **Abstract**

Provided is a caliper body for a vehicle disc brake which can be made lightweight and with which running can be improved for a caliper body formed by casting. The caliper body 5, which is provided with an action part 5a equipped with a cylinder hole 5d, a reaction part 5b equipped with reaction claws 5k, 5k, and a bridge part 5c arranged straddling a disc rotor 2, is formed by casting. The bridge part 5c is equipped with, on the outer surface thereof, a gate mark 5g formed by cutting off the gate after casting of the caliper body 5, and has, provided on the inner surface 5h corresponding to the gate mark 5g, a thinned portion 5j formed by slanted surfaces 5i, 5i that gradually become thinner toward the middle portion in the disc axial direction.

## Description

### Technical Field

The present invention relates to a caliper body for a vehicle disc brake.

### Background Art

There is a conventional caliper body for a vehicle disc brake formed by connecting an action part having a cylinder hole to a reaction part having reaction claws via a bridge part (see, for example, patent literature 1).

### Citation List

### Patent Literature

PTL 1: Japanese Patent No. 5674409

### Summary of Invention

### Technical Problem

Lightweight has been desired for the above caliper body disclosed in patent literature 1. In addition, for a caliper body formed by casting, improvement of running in casting has been desired.

Accordingly, an object of the present invention is to provide a caliper body for a vehicle disc brake that can be made lightweight and improve running for a caliper body formed by casting.

### Solution to Problem

To achieve the above object, a caliper body for a vehicle disc brake according to the present invention includes an action part disposed beside a disc rotor, the action part having a cylinder hole; and a bridge part disposed straddling the disc rotor, in which a thinned portion that is gradually thinner toward a middle portion in a disc axial direction is formed in the bridge part.

In addition, preferably, the thinned portion is formed by slanted surfaces that are gradually thinner toward the middle portion in the disc axial direction.

In addition, preferably, the caliper body is formed by connecting the action part and a reaction part having a plurality of reaction claws to each other via the bridge part, and the reaction part has a reaction claw side thinned portion that is concave toward a disc outer circumference in an intermediate portion between adjacent reaction claws of the plurality of reaction claws.

In addition, preferably, the caliper body is formed by casting, the bridge part has, on an outer surface thereof, a gate mark formed by cutting out a gate after casting of the caliper body, and the thinned portion is formed on the part of an inner surface that corresponds to the gate mark.

### Advantageous Effects of Invention

In the caliper body for a vehicle disc brake according to the present invention, the caliper body can be made lightweight by forming, in the bridge part, the thinned portion that is gradually thinner toward the middle portion in the disc axial direction.

Furthermore, the thinned portion can be formed easily because the thinner portion is formed by slanted surfaces that are gradually thinner toward the middle portion in the disc axial direction.

In addition, in the caliper body formed by connecting the action part and the reaction part having the reaction claws to each other via the bridge part, since the reaction claw side thinned portion that is concave toward the disc outer circumference is formed in the intermediate portion between adjacent reaction claws of the plurality of reaction claws, the caliper body can be made further lightweight.

Furthermore, the caliper body is formed by casting, a gate mark formed by cutting out the gate after casting the caliper body is provided on the outer surface of the bridge part, and the thinned portion is formed on the inner surface of the bridge part that corresponds to the gate mark, so molten metal flows satisfactorily from the gate provided in the bridge part toward the action part and the reaction part, thereby shortening the casting time and improving the quality of the cast body.

### Brief Description of Drawings

[Fig. 1] Fig. 1 is a sectional view taken along line I-I in Fig. 2.
[Fig. 2] Fig. 2 is a front view illustrating a caliper body according to an embodiment of the present invention.
[Fig. 3] Fig. 3 is a rear view illustrating the caliper body.
[Fig. 4] Fig. 4 is a front view illustrating a vehicle disc brake.
[Fig. 5] Fig. 5 is a sectional view taken along line V-V in Fig. 4.
[Fig. 6] Fig. 6 is a partial sectional plan view illustrating the vehicle disc brake according to an embodiment of the present invention.
[Fig. 7] Fig. 7 is a sectional view taken along line VII-VII in Fig. 6.
[Fig. 8] Fig. 8 is an explanatory diagram illustrating the casting state of the caliper body.
[Fig. 9] Fig. 9 is a sectional view taken along line IX-IX in Fig. 8.

### Description of Embodiments

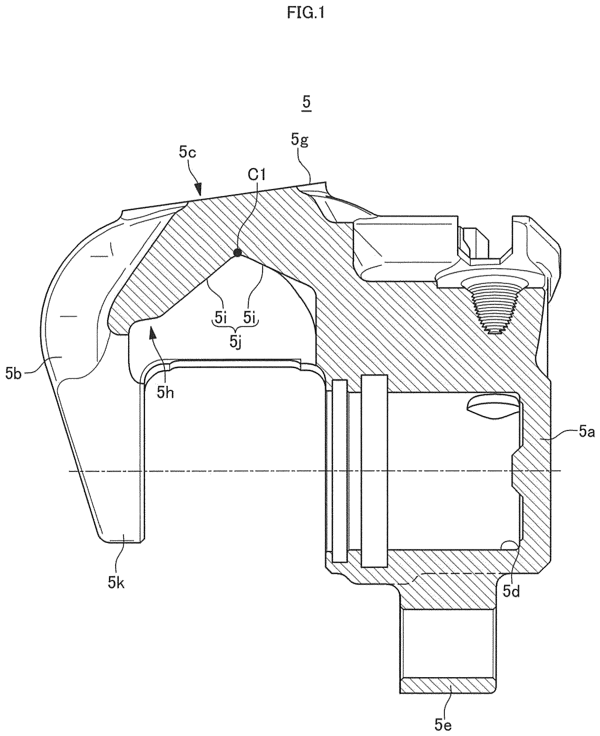

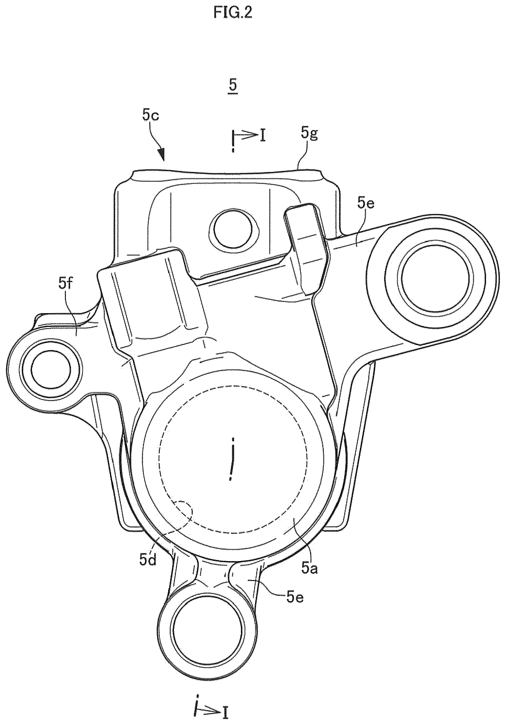

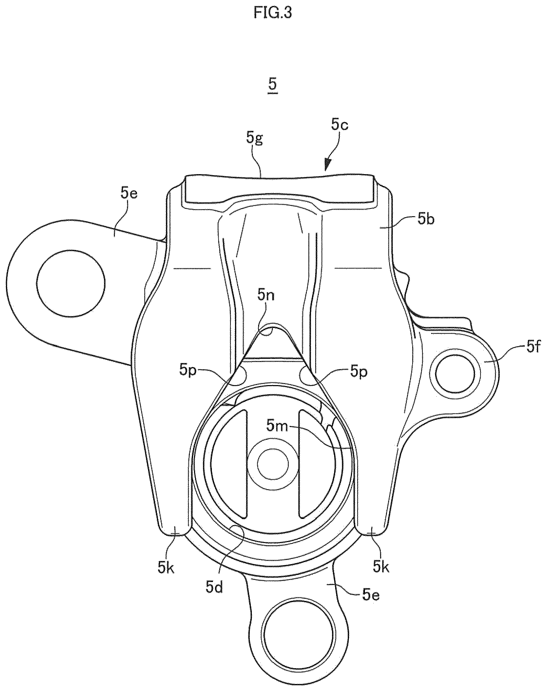

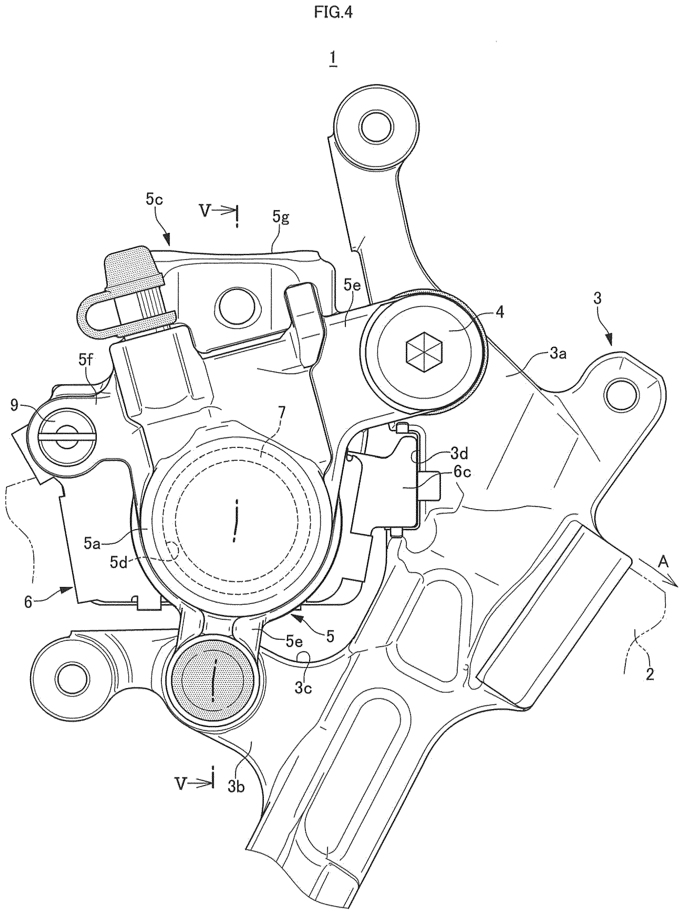

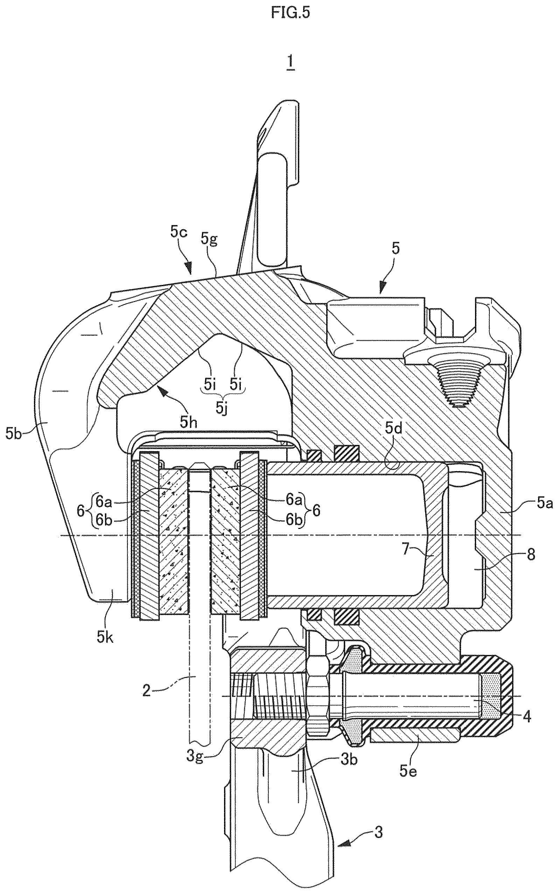

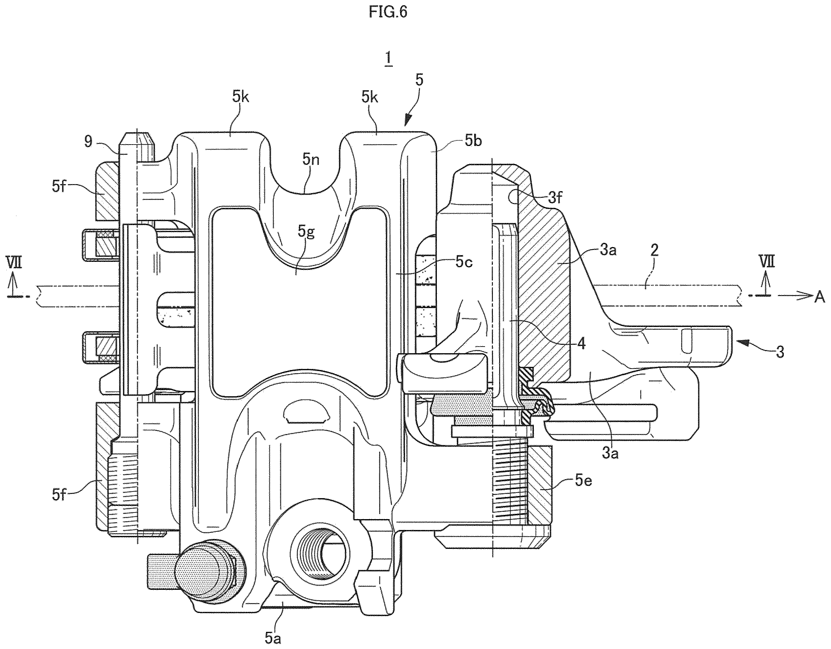

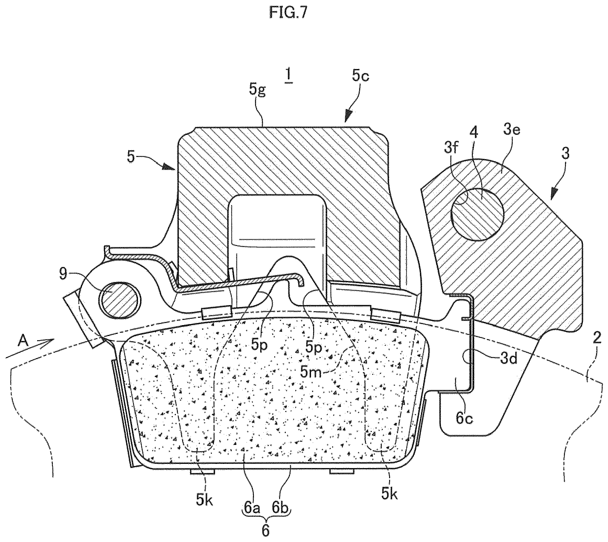

Figs. 1 to 7 illustrate a caliper body for a vehicle disc brake according to an embodiment of the present invention, in which arrow A indicates the rotation direction of a disc rotor that rotates integrally with wheels when the vehicle moves forward and the disc turn-out side and disc turn-in side described below assume that the vehicle moves forward.

The vehicle disc brake 1 includes a disc rotor 2 that rotates integrally with the rear wheel, a caliper bracket 3 that is fixed to the vehicle body, a caliper body 5 that is supported by the caliper bracket 3 via slide pins 4 and 4 so as to be movable in the disc axial direction, and a pair of friction pads 6 and 6 disposed so as to face each other with the disc rotor 2 sandwiched between an action part 5a and a reaction part 5b of the caliper body 5.

The caliper bracket 3 includes a turn-out side caliper support arm 3a and a turn-in side caliper support arm 3b, and an accommodating portion 3c for the friction pads 6 and 6 is formed between the turn-out side caliper support arm 3a and the turn-in side caliper support arm 3b. A U-shaped torque receiving portion 3d is provided on the side surface of the turn-out side caliper support arm 3a close to the accommodating portion, a caliper support arm 3e straddling the outer circumference of the disc rotor 2 projects in the disc axial direction on the end side of the turn-out side caliper support arm 3a, and a bag-shaped slide pin insertion hole 3f is formed in the caliper support arm 3e.

The caliper body 5 is formed by casting, the action part 5a and the reaction part 5b disposed on both sides of the disc rotor 2 are connected to each other by a bridge part 5c straddling the outer circumference of the disc rotor 2, and the pair of friction pads 6 and 6 are disposed so as to face each other with the disc rotor 2 sandwiched between the action part 5a and the reaction part 5b.

In the action part 5a, a bottomed cylinder hole 5d is opened toward the disc rotor, the piston 7 is movably inserted into the cylinder hole 5d, and a hydraulic chamber 8 is defined between the bottom side of the cylinder hole 5d and the piston 7. In addition, in the action part 5a, the vehicle body mounting arms 5e and 5e project toward the disc turn-out side and the inside in the radial direction of the disc, and guide arms 5f and 5f project on the disc turn-in side of the action part 5a and on the disc turn-in side of the reaction part 5b.

The bridge part 5c has, on the outer surface thereof, a gate mark 5g formed by cutting out a gate 21 after casting the caliper body 5, and a thinned portion 5j formed by slanted surfaces 5i and 5i that are gradually thinner toward a middle portion C1 in the disc axial direction is provided on the part of the inner surface 5h that corresponds to the gate mark 5g.

A pair of reaction claws 5k and 5k are provided in the reaction part 5b, and an inverted U-shaped opening portion 5m opened toward the center of the disc is formed at a position corresponding to the cylinder hole 5d between the reaction claws 5k and 5k. Furthermore, a reaction claw side thinned portion 5n that is concave toward the disc outer circumference is formed in the intermediate portion of the opening portion 5m, and the reaction claw side thinned portion 5n has a pair of reaction claw side slanted surfaces 5p and 5p that are concave like a substantially triangular shape toward the disc outer circumference.

Each of the friction pads 6 includes a lining 6a in sliding contact with a side surface of the disc rotor 2 and a metal back plate 6b joined to the lining 6a. The friction pads 6 are supported movably in the disc axial direction by causing a hanger pin 9 bridged across the guide arms 5f and 5f to hang the disc turn-in side of the back plate 6b and causing the torque receiving portion 3d of the caliper bracket 3 to hold an ear piece 6c projecting toward the disc turn-out side of the back plate 6b.

The caliper body 5 is supported movably in the axial direction of the disc rotor by causing the slide pin 4 to project toward the disc rotor in the vehicle body mounting arm 5e, inserting the slide pin 4 into the slide pin insertion hole 3f of the caliper bracket 3, causing the slide pin 4 to project opposite to the disc rotor in a slide pin mount portion 3g of the caliper bracket 3, and inserting the slide pin 4 into the vehicle body mount arm 5e of the caliper body 5.

When the hydraulic fluid pressurized by a hydraulic master cylinder provided separately is supplied to the hydraulic chamber 8 in braking, the vehicle disc brake 1 formed as described above pushes the piston 7 toward the disc rotor to push the friction pad 6 close to the action part against the side to one side of the disc rotor 2. Next, the caliper body 5 moves toward the action part while being guided by the slide pins 4 and 4 due to a reaction and the reaction claws 5k and 5k push the friction pad 6 close to the reaction part to the other side surface of the disc rotor 2 to perform a braking action.

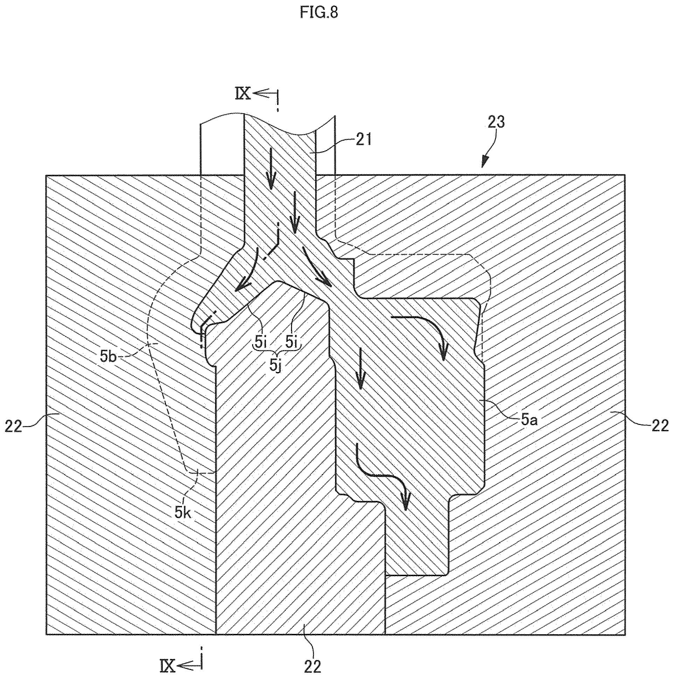

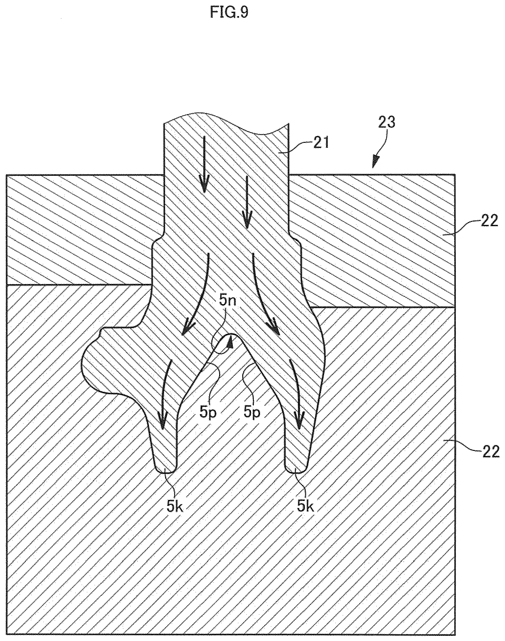

The casting of the caliper body 5 according to embodiment is performed by use of a caliper body casting mold 23, which is a combination of a plurality of molds 22, as illustrated in Fig. 8 and 9, and the gate 21 is provided in the part of the caliper body casting type 23 in which the bridge part 5c is formed. As illustrated by the arrows, the molten metal introduced from the gate 21 flows to the action part 5a and the reaction part 5b satisfactorily while being guided by the slanted surfaces 5i and 5i constituting the thinned portion 5j. In the caliper body cast body having been casted, the gate 21 is cut out to form the gate mark 5g and the caliper body 5 is formed by finishing, screwing, and the like.

As described above, in the caliper body 5 according to the embodiment, by providing the gate 21 in the bridge part 5c located in the middle of the caliper body 5 in casting, introducing the molten metal from the gate 21, and providing the thinned portion 5j formed on the part of the inner surface 5h that corresponds to the gate mark 5g by the slanted surfaces 5i and 5i gradually thinner toward the middle portion in the disc axial direction, the molten metal flows satisfactorily in the caliper body casting mold 23 when the caliper body 5 is casted, and the running is improved. In addition, on the side of the reaction part 5b, by providing the reaction claw side thinned portion 5n having the reaction claw side slanted surfaces 5p and 5p, the molten metal flows satisfactorily throughout the reaction claws 5k and 5k while being guided by the surface 5p and 5p, thereby shortening the casting time and improving the quality of the cast body. In addition, the caliper body 5 can be made lightweight by the thinned portion 5j and the reaction claw side thinned portion 5n.

The caliper body for a vehicle disc brake according to the present invention does not need to be formed by casting unlike the embodiment described above and may be formed by forging, and the caliper body can be made lightweight by forging. In addition, the number of pistons is arbitrary and the number of reaction claws is also arbitrary accordingly. Furthermore, the thinned portion may have any shape such as an arc surface as long as the shape is gradually thinner toward the middle portion in the disc axial direction. In addition, the reaction claw side thinned portion does not need to be provided. Furthermore, the caliper body according to the present invention is not limited to a pin-slide type caliper body having the action part, the reaction part, and the bridge part and may be applied to an opposed piston type caliper body.

### Reference Signs List

1: vehicle disc brake, 2: disc rotor, 3: caliper bracket, 3a: turn-out side caliper support arm, 3b: turn-in side caliper support arm, 3c: accommodating portion, 3d: torque receiving portion, 3e: caliper support arm, 3f: slide pin insertion hole, 3g: slide pin mount portion, 4: slide pin, 5: caliper body, 5a: action part, 5b: reaction part, 5c: bridge part, 5d: cylinder hole, 5e: vehicle body mount arm, 5f: guide arm, 5g: gate mark, 5h: inner surface, 5i: slanted surface, 5j: thinned portion, 5k: reaction claw, 5m: opening portion, 5n: reaction claw side thinned portion, 5p: reaction claw side slanted surface, 6: friction pad, 6a: lining, 6b: back plate, 6c: earpiece, 7: piston, 8: hydraulic chamber, 9: hanger pin, 21: gate, 22: mold, 23: caliper body casting mold

## Claims

1. A caliper body for a vehicle disc brake, comprising:
an action part disposed beside a disc rotor, the action part having a cylinder hole; and
a bridge part disposed straddling the disc rotor,
wherein a thinned portion that is gradually thinner toward a middle portion in a disc axial direction is formed in the bridge part.

2. The caliper body for a vehicle disc brake according to claim 1,
wherein the thinned portion is formed by slanted surfaces that are gradually thinner toward the middle portion in the disc axial direction.

3. The caliper body for a vehicle disc brake according to claim 1 or 2,
wherein the caliper body is formed by connecting the action part and a reaction part having a plurality of reaction claws to each other via the bridge part, and
the reaction part has a reaction claw side thinned portion that is concave toward a disc outer circumference in an intermediate portion between adjacent reaction claws of the plurality of reaction claws.

4. The caliper body for a vehicle disc brake according to any one of claims 1 to 3,
wherein the caliper body is formed by casting, the bridge part has, on an outer surface thereof, a gate mark formed by cutting out a gate after casting of the caliper body, and the thinned portion is formed on a part of an inner surface that corresponds to the gate mark.
